# NEUE EUROPÄISCHE PATENTSCHRIFT

(11) **EP 0 131 955 B2**
(45) Veröffentlichungstag und Bekanntmachung des Hinweises auf die Entscheidung über den Einspruch: **20.01.1993**
(45) Hinweis auf die Patenterteilung: 22.07.1987
(21) Anmeldenummer: 84108379.3
(22) Anmeldetag: 17.07.1984
(51) Int. Cl.: F27B 9/20, C04B 33/32

(54) **Verfahren zur Wärmebehandlung von zylindrischen Gegenständen, insbesondere Röhren, insbesondere aus keramischem Material, und Durchlaufofen zur Durchführung des Verfahrens**
Process and continuous oven for the thermal treatment of cylindrical objects, especially tubes, preferably made of ceramic material
Procédé et installation pour le traitement thermique d'objets cylindriques, en particulier de tubes, notamment fait de matériaux céramiques

(30) Priorität: 19.07.1983 DE 3325944
(43) Veröffentlichungstag der Anmeldung: 23.01.1985
(73) Patentinhaber: A.P.T. Anlagen für Pyrotechnik GmbH, 40215 Düsseldorf (DE)
(72) Erfinder: Verheyden, Gerardus M.C., Jr., NL-6980 AB Doesburg (NL)
(74) Vertreter: Cohausz & Florack Patentanwälte

(56) Entgegenhaltungen:
- EP-A- 0 005 940
- DE-B- 1 268 318
- FR-A- 2 314 117
- FR-A- 2 325 007
- US-A- 2 039 129
- US-A- 2 481 130
- US-A- 2 612 706

## Beschreibung

Die Erfindung bezieht sich auf ein Verfahren zur Wärmebehandlung von zylindrischen Körpern auskeramischem Material insbesondere Röhren, die während der Wärmebehandlung in horizontaler Lage durch verschiedene Temperaturzonen transportiert und zumindest auf dem Teil des Transportweges mit der höchsten Temperatur um ihre eigenen Achsen gedreht werden.

Die Erfindung bezieht sich ferner auf eine Anlage zur Durchführung eines solchen Verfahrens, die aus mehreren, hintereinander angeordneten Kammern mit Heizeinrichtungen und Transportmittel für den Transport der zylindrischen Körper in horizontaler Lage durch die Kammern besteht.

Es ist bekannt, keramische Röhren in einem Durchlaufofen wärmezubehandeln (Europäische Patentanmeldung 0 005 940). Der Ofen ist in drei Zonen unterteilt, und zwar in eine Vorwärmzone, eine Haupterhitzungs- und Sinterungszone und in eine Kühlzone. Durch die erste Zone werden die Röhren auf Trägern abgestützt transportiert und getrocknet. In der zweiten Zone, in der das keramische Material der Röhren thermoplastisch wird, werden die Röhren über den Ofenboden gerollt, damit sie sowohl gleichmäßig über den Umfang erwärmt werden, als auch eine Verformung des Querschnitts verhindert wird. In der letzten Zone werden die Röhren wieder auf Stützen transportiert und abgekühlt.

Die Wärmebehandlung der Röhren in solchen Öfen ist aus verschiedenen Gründen ungünstig. Da die Erwärmung der Röhren im wesentlichen von außen durch Wärmeabstrahlung der Ofendecke und der Wände des Ofens erfolgt, die Wärmeleitung der Röhrenwand bei den meisten keramischen Werkstoffen aber schlecht ist, dauert es verhältnismäßig lange, bis die Röhren bis zur Innenseite auf die gewünschte Temperatur gebracht worden sind. Lange Behandlungszeiten erfordern lange Öfen und sind deshalb wärmewirtschaftlich ungünstig. Würde man versuchen, die Röhren auf dem gesamten Transportweg zu rollen, um von Anfang an eine gleichmäßigere Erwärmung oder eine gleichmäßigere Abkühlung auf dem gesamten Umfang zu erhalten, bestünde die Gefahr, daß sich die Röhren auf dem Herdboden axial verlagern und an den Wänden anstoßen. Außerdem würde in diesem Fall die Transportgeschwindigkeit von der für eine gleichmäßige Erwärmung unmittelbar abhängigen Drehgeschwindigkeit abhängen und damit bei einer vorgegebenen Aufenthaltsdauer in der einzelnen Zone die Länge der Behandlungszone bestimmen.

Der Erfindung liegt die Aufgabe zugrunde, ein Verfahren und eine Anlage zu schaffen, das bzw. die mit größerer Effektivität die Wärmebehandlung von zylindrischen, langgestreckten Körpern aus keramischem Material ermöglicht.

Diese Aufgabe wird verfahrensmäßig dadurch gelöst, daß die zylindrischen Körper während des gesamten Transportes durch die einzelnen Wärmezonen mit einer Umfangsgeschwindigkeit um ihre eigenen Achsen gedreht werden, die unabhängig von der Transportgeschwindigkeit und ausreichend groß ist, um während des Aufenthaltes in den einzelnen Zonen eine gleichmäßige Erwärmung und gegebenenfalls Abkühlung zu gewährleisten und unter Berücksichtigung der temperaturabhängigen Formsteifigkeit der Körper eine Deformation der Körper zu verhindern, wobei in der Behandlungszone mit der höchsten Temperatur und zwar der Sinterzone der in der vorgeordneten Behandlungszone vorerwärmte Körper bei unterbrochenem Transport unter Aufrechterhaltung der Eigendrehung bis auf die gewünschte maximale Temperatur und zwar der Sintertemperatur und in eine erwärmt wird.

Ferner ist es bekannt keramische Röhven durch eine beheizte Trocken kammer zu transportieren, wobei die Röhren auf Tragelementen abgestützt sind, die ihnen während des Transportes eine Eigendrehung verleihen (US-A-2 481130)

Anlagemäßig wird diese Aufgabe dadurch gelöst, daß die Transportmittel in den einzelnen Zonen angetriebene Tragelemente aufweisen, mit denen die Körper unabhängig von der Transportgeschwindigkeit in den einzelnen Zonen um ihre eigenen Achsen drehbar sind, wobei die Kammer für die Wärmebehandlung mit der höchsten Temperatur abgeschotteten Ränn für eine stationäre Wärmebehandlung unter Aufrechterhaltung der Eigendrehung für eine Abschottung eingerichtet ist.

Da bei der Erfindung die zu erwärmenden Körper während der Wärmebehandlung um ihre eigenen Achsen gedreht werden, ist gewährleistet, daß sie über den Umfang gleichmäßig erwärmt werden, so daß Zeit für einen Temperaturausgleich zwischen stärker und schwächer erwärmten Bereichen des Umfanges nicht benötigtwird. Dadurch ist es möglich, die Erwärmung schneller vorzunehmen. Eine schnellere Erwärmung der Körper läßt eine kürzere Behandlungszone zu. Daraus ergibt sich der Vorteil, daß in den sich doch über beträchtliche Längen erstreckenden Zonen mit den niedrigeren Temperaturen für die Kammern und die Transportmittel keine hochhitzebeständigen Materialien benötigt werden. Die hochhitzebeständigen Materialien werden nur für die Zone mit der höchsten behandlungstemperatur, die keine große Ausdehnung hat, benötigt.

Sofern Röhren wärmebehandelt werden sollen, kann die Wärmebehandlung weiter dadurch beschleunigt werden, daß die Wärme nicht nur von außen, sondern auch von innen zugeführt wird. Dies kann beispielsweise dadurch geschehen, daß Heißluft bzw. Kühlluft in das Innere der Röhren geblasen wird. Vorzugsweise erfolgt das Einblasen von Heißluft bzw. Kühlluft auf dem Transportweg der Rühren abwechselnd von entgegengesetzten Seiten, um auch von innen her möglichst gleichmäßig Wärme zuzuführen. Die Wärme kann auch mittels eines axial in die Röhren einführbaren Heizelementes erfolgen. Eine derartige Aufheizung bietet sich vor allem in der Behandlungszone mit der höchsten Temperatur Sinterzone an, in der die Röhren stationär aber mit einer derart hohen Eigenrotation behandelt werden, daß eine Deformation des thermoplastischen Materiales vermieden werden kann. Während die Aufheizgeschwindigkeit in der Behandlungszone mit der höchsten Temperatur (Sinterzone) unkritisch ist, muß die Aufheizung und Abkühlung der Körper in den vor- und nachgeordneten Behandllungszone dagegen sehr kontrolliert erfolgen, was wegen der langen Behandlungszonen und der dabei möglichen Eigenrotation der zu behandelnden Körper problemlos möglich ist.

Das Aufheizen der Körper in der Behandlungszone mit der höchsten Temperatur kann in der Weise erfolgen, daß die Temperatur in der für die Behandlung mit der höchsten Temperatur vorgesehenen Behandlungszone bei Eintritt des Körpers in diese Behandlungszone von der Temperatur am Ende der vorgeordneten Behandlungszone bis auf die gewünschte höchste Endtemperatur angehoben und vor demVerlassen dieser Behandlungszone auf die Temperatur am Ende der nachgeordneten Behandlungszone abgesenkt wird. Diese Ausgestaltungen der Erfindung ermöglichen es, die wärmezubehandelnden Körper in einer sehr kurzen und deshalb wenig Wärmeenergie benötigenden Zone zu behandeln. Ein weiterer Vorteil eines solchen Verfahrens besteht darin, daß nur für diese kleine Temperaturzone hochwertiges und deshalb auch teures hochtemperaturfestes, keramisches Material benötigt wird, während für die anderen, größeren Zonen mit den geringeren Temperaturen von bis zum Beispiel maximal 800° C, preiswerteres Material, und zwar normaler rostfreier Stahl verwendet werden kann. Wärmebehandlung in der Temperaturzone mit der höchsten Behandlungstemperatur in einem von der vorgeordneten und nachgeordneten Zone abgeschotteten Raum hat den Vorteil, daß die Wärmebehandlungsstrecke kurz bleibt und keine Temperaturausgleichszone benötigt wird, die aus hochwertigem, hochtemperaturfestem Material bestehen müßte und zusätzlich Wärmeverlust mit sich bringt.

Sowohl von den für die Wärmebehandlung benötigten Längen der Transportwege der Körper durch die Zonen als auch hinsichtlich der Wärmebilanz für die Wärmebehandlung ist von Vorteil, wenn der Transport der Körper zu und von der Wärmebehandlungszone mit der höchsten Temperatur parallel, insbesondere übereinander, erfolgt, wobei zwischen den Gegenständen des einen Transportstranges und den des anderen, gegenläufigen Transportstranges ein Wärmeaustausch stattfindet. Vorzugsweise erfolgt der Wärmeaustausch durch an den Körpern vorbeigeleitete Luft. Dieser Wärmeaustausch ist vor allem dann besonders wirksam, wenn die Luft im Gegenstrom an den Transportsträngen vorbeigeleitet wird.

Nach einer ersten Ausgestaltung der Anlage sind die Transportmittel in an sich bekannter Weise (US-PS 2 481130) endlose Bänder oder Ketten mit angetriebenen Stützrollen oder Tragarmen. Nicht an sich vorbekannt ist dabei die weitere Ausgestaltung der Erfindung, daß der eine Trum des Bandes oder der Kette durch eine der Behändlungszone mit der höchsten Temperatur vorgeordnete Kammer und der gegenläufige, andere Trum des Bandes oder der Kette durch eine Kammer läuft, die entsprechend weit der Behandlungszone mit der höchsten Temperatur nachgeordnet ist. Diese Ausgestaltung führt sowohl zu einer kompakten Bauweise als sie auch die Möglichkeit des Wärmeaustauschs zwischen den beiden Kammern mit entsprechender Führung der Atmosphäre der Kammern ermöglicht.

Um die Übertragung der wärmezubehandelnden Körper aus der einen Kammer in die andere Kammer zu erleichtern, können die in Transportrichtung hintereinander angeordneten Kammern seitlich gegeneinander versetzt und mit ihren Transportmitteln einander überlappend angeordnet sein. In diesem Fall lassen sich die in Querlage horizontal transportierten, länglichen Körper axial von den Transportmitteln der einen Kammer auf die Transportmittel der anderen Kammer schieben.

Sofern mehrere Wärmebehandlungszonen der Zone mit der höchsten Temperatur vorgeordnet sind, z. B. vor der Kammer mit der höchsten Temperatur eine Trocknungskammer und eine Erwärmungskammer, und nach der Kammer mit der höchsten Temperatur eine erste Kühlkammer und eine zweite Kühlkammer, dann ist es besonders vorteilhaft, die gleich weit der Kammer mit der höchsten Temperatur vor-und nachgeordneten Kammern mit den Transportmitteln übereinander anzuordnen, weil in diesen Zonen sich die Temperaturen für die Trocknung und Nachkühlung bzw- Erwärmung und erste Abkühlung hinsichtlich des Wärmeaustauschs und die erforderlichen Transportgeschwindigkeiten besonders gut entsprechen.

Da, wie bereits oben erwähnt, in der Zone mit der höchsten Temperatur die Behandlung der Körpers stationär erfolgt, aber ein Umsetzen der Körper aus der Ebene der vorgeordneten Transporteinrichtung auf die andere Ebene der nachgeordneten Transporteinrichtung erforderlich ist, ist in einer weiteren Ausgestaltung der Erfindung vorgesehen, die Kammer für die Behandlung mit der höchsten Temperatur mit einer Hebevorrichtung auszurüsten, mit der der Körper aus der ersten Ebene in die andere Ebene während der Wärmebehandlung umsetzbar ist. Auch diese Kammer kann entsprechend der Versetzung der vorgeordneten und nachgeordneten Kammern seitlich versetzt an der anschließenden Kammer angeordnet sein, um die wärmezubehandelnden Körper durch axiales Verschieben übergeben zu können. Es versteht sich, daß auch andere, räumliche Anordnungen zwischen den Kammern mit entsprechend eingerichteten Übergabevorrichtungen im Rahmen der Erfindung möglich sind.

Im folgenden wird die Erfindung anhand einer ein Ausführungsbeispiel darstellenden Zeichnung näher erläutert. Im einzelnen zeigen
Fig. 1 eine Anlage zur Wärmebehandlung von länglichen, kreiszylindrischen, keramischen Körpern in schematischer Darstellung in Aufsicht,
Fig. 2 die der Kammer mit der höchsten Behandlungstemperatur unmittelbarvor- und nachgeordneten Kammern in schematischer Darstellung in Seitenansicht, in Richtung des Pfeiles A in Fig. 1 und
Fig. 3 die Kammer mit der höchsten Temperatur (Sinterkammer) und die beiden unmittelbar vor-und nachgeordneten Kammern im Schnitt nach der Linie B - B der Fig. 1.

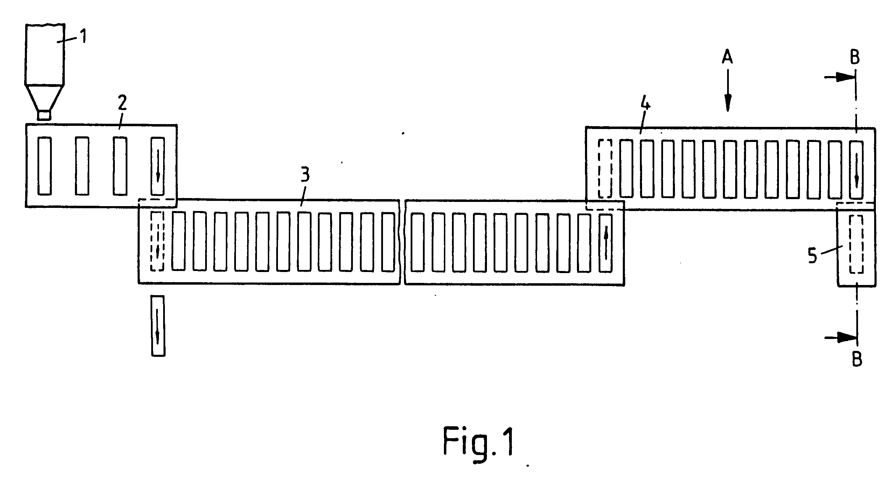

Die von einem Extruder 1 erzeugten Röhren aus keramischem Material werden in eine kombinierte Schneid-, Form- und Ausrichteinheit 2 übergeben. An diese Einheit 2 schließt sich eine kombinierte Trocknungs- und Kühlkammer 3 an. An die Kammer 3 schließt sich eine kombinierte Erwärmungs- und Kühlkammer 4 an, an die sich wiederum eine Haupterwärmungs- bzw. Sinterkammer 5 anschließt. Die Einheit 2 und die einzelnen Kammern 4, 5, 3 sind, wie aus Fig. 1 ersichtlich, gegeneinander versetzt und einander überlappend angeordnet. Auf diese Art und Weise ist es möglich, die wärmezubehandelnden Gegenstände 9 durch Axialverschiebung von der einen Einheit oder Kammer auf die nachfolgende Kammer zu übergehen.

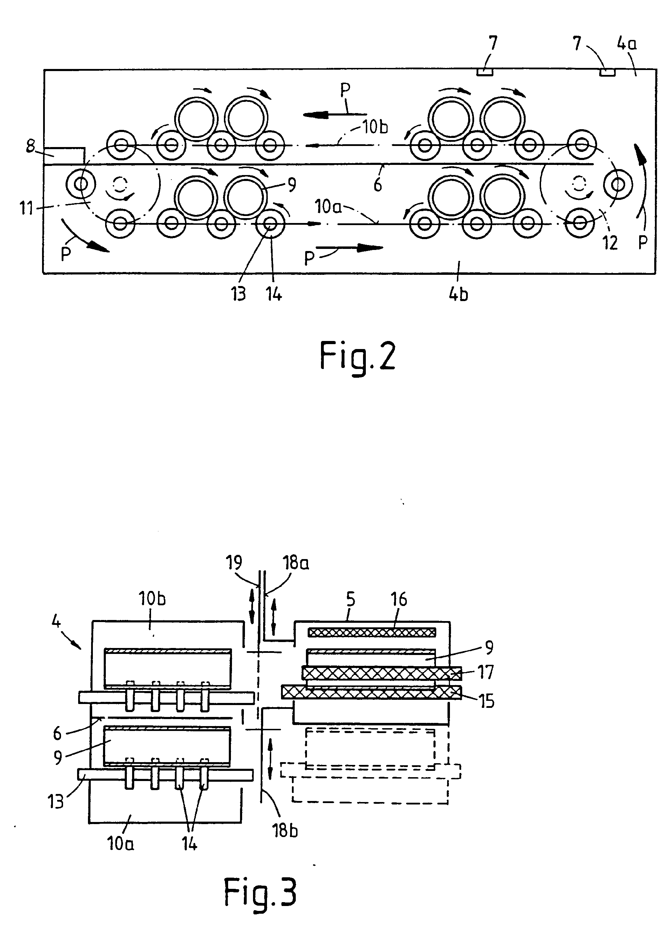

Die Kammern 3 und 4 haben denselben Aufbau. Sie unterscheiden sich nur in der Behandlungstemperatur. Deshalb genügt es, den Aufbau der Kammern 3 und 4 am in Fig. 2 dargestellten Beispiel der Kammer 4 zu beschreiben.

Die Kammer 4 ist durch eine mittlere, horizontale Trennwand 6 in eine obere Teilkammer 4a und eine untere Teilkammer 4b unterteilt. Die Atmosphäre der Kammer 4a wird beheizt, beispielsweise durch gasbetriebene Brenner 7. Mittels eines Gebläses 8 ist es möglich, die Atmosphäre durch die Teilkammern 4a, 4b in Richtung der Pfeile P umzuwälzen.

Für den Transport der zu erwärmenden bzw. zu kühlenden Röhren 9 ist eine Transportvorrichtung vorgesehen, die die Röhren 9 translatorisch gegenläufig zur Strömungsrichtung der Atmosphäre durch die Teilkammern 4a, 4b transportiert. Die Transportvorrichtung besteht aus einer oder mehreren parallelen Endlosketten 10a, 10b, die über Umlenkrollen 11, 12 geführt und angetrieben ist. Die Kette 10a, 10b trägt eine Vielzahl von mit Abstand voneinander angeordneten, angetriebenen Rollen 13, die mit einer Vielzahl von mit gegenseitigem Abstand angeordneten gleich großen Kreisscheiben 14 besetzt sind. Die Kreisscheiben 14 benachbarter Rollen tragen jeweils eine Röhre 9. An Stelle dieserangetriebenen Tragelemente 13, 14 könnten die Ketten 10a, 10b auch angetriebene Kragarme tragen, die axial in die Röhren 9 hineinragen. In jedem Fall ist die von den Tragelementen abgestützte Fläche klein. Der Aufbau und der Antrieb der beschriebenen Transportmittel ist an sich aus der US-PS 2 481 130 bekannt. In den Seitenwänden der Kammer 4 können im Bereich der Transportebene der Röhren 9 Gebläse vorgesehen sein, die beim Transport der Röhren 9 abwechselnd von gegenüberliegenden Stirnseiten Heißluft oder Kühlluft in das Innere der Röhren blasen. Dadurch wird erreicht, daß die Röhren nicht nur von außen durch die Atmosphäre und Strahlung der Wände und Decke der Kammer mit Wärmebeaufschlagt werden, sondern auch von innen her. Diese Art der Wärmezufuhr gewährleistet eine schnelle und in Kombination mit der Eigenrotation der Röhren 9 gleichmäßige Erwärmung der Röhren 9.

Die Kammer 5 weist ein angetriebenes Rollenpaar 15 auf, das die Röhren 9 abstützt und in Eigenrotation versetzt. In der Kammer 5 werden die Röhren durch ein Deckenheizelement 16 und ein axial in die Röhren 9 hineinragendes Heizelement 17 aufgeheizt. Die Kammer 5 ist aus einer oberen, in Fig. 3 ausgezeichneten, oberen Stellung in eine untere, gestrichelte Stellung absenkbar. An der Kammer 5 sind dem Aus-und Eingang der Teilkammern 4a, 4b zugewandte Abschlüsse 18a, 18b gehalten, mit denen wechselweise derAus- und Eingang derTeilkammern 4a, 4b in Abhängigkeit von der Position der Kammer 5 verschließbar ist. Mittels einer Schieberplatte 19 ist der Ein- und Ausgang der Kammer 5 abschottbar.

Mit der Heizeinrichtung 15, 16 ist es möglich, die Röhren während der Eigenrotation von der bei Übernahme niedrigen Anfangstemperatur auf die gewünschte hohe Sintertemperatur aufzuheizen. Nach dieser Aufheizung kann die Heizeinrichtung abgeschaltet und die Atmosphäre der Kammer auf die Temperatur gesenkt werden, die der Temperatur am Anfang der nachgeordneten Kammer 4b entspricht. Die Herstellung der Röhren erfolgt mit der beschriebenen Anlage auf folgende Art und Weise:

Die vom Extruder 1 geformten hohlen Stränge werden in der Schneid-, Form- und Ausrichteinheit auf Länge geschnitten, auf genaues Maß gebracht und ausgerichtet. Die so geformten Röhren 9 werden durch Axialverschieben in die obere Teilkammer der Kammer 3 übergeben. Die Transporteinrichtung dieser Kammer stützt die Röhren auf zwei Kreisscheibenpaare ab und versetzt die Röhren 9 in Rotation. Während dieser Rotation erfolgt auch der Transport. Die Atmosphäre der Teil kammer ist auf eine Trocknungstemperatur eingestellt..Um die Röhren nicht schlagartig einer zu hohen Temperatur auszusetzen, steigt die Temperatur während des Transportes an. Zu diesem Zweck werden die Röhren außen von im Gegenstrom geführter Luft überstrichen. Die Steuerung der in das Innere der Röhren einzublasenden Luft kann entsprechend gewählt sein. Am Ende der Teilkammer werden die Röhren 9 wieder axial verschoben und an die entsprechende Transporteinrichtung der nachgeordneten Teilkammer 4a übergeben. Der Transport in dieser Kammer ist der gleiche, ebenso die Art der Erwärmung, allerdings mit höheren Temperaturen. Em Ende der Teilkammer 4a werden die Röhren wieder axial in die Kammer 5 verschoben, wo sie bis auf Sintertemperatur erwärmt werden. Da die Anfangstemperatur der Kammer 5 gleich der Temperatur am Ende der Kammer 4ₐ ist, werden die Röhren nicht durch einen schädlichen Temperatursprung belastet. Die Erwärmung in der Kammer 5 erfolgt dann allerdings sehr schnell, was wegen der gleichmäßigen Erwärmung von außen und innen bei gleichzeitiger Rotation unschädlich ist. Nach Erreichen der Sintertemperatur und anschließender Abkühlung bis auf die am Anfang der Teilkammer 4b herrschende Temperatur werden die Röhren wieder axial verschoben und in die Teilkammer 4b auf den unteren Trum 10a der Transporteinrichtung übergeben. In diesem Bereich erfolgt die Abkühlung, und zwar kontinuierlich, denn auch hier werden die Röhren mit im Gegenstrom geführter Kühlluft überstrichen. Diese Kühlluft kommt aus der oberen Teilkammer 4a. Auf diese Art und Weise erhält man zwischen den beiden Teilkammern 4a, 4b einen Wärmeaustausch. In entsprechender Weise werden die Röhren in der nächsten Kühlzone der Kammer 3 gekühlt. Am Ende der Kammer 3 werden die Röhren axial aus der Anlage herausgeschoben.

Da die Röhren auf Kreisscheiben 14 getragen sind oder auf Kragarmen, können die Außen- und Innenflächen nicht nur gut mit Heißluft oder Kühlluft beaufschlagt werden, sondern es ist auch genügend platz zum Durchfallen von Scherben dann noch vorhanden, wenn die Röhren sehr eng zueinander liegen, sei es, daß Röhren großen Durchmessers transportiert werden, sei es, daß die Tragelemente eng zueinander liegen.

Es versteht sich, daß es im Rahmen der Erfindung möglich ist, die hintereinander angeordneten Kammern in einer Linie anzuordnen, insbesondere die Kammer 5, und diese auch anders auszubilden, also ebenfalls einen Transport in dieser Kammer vorzusehen und nicht nur ein Umsetzen aus einer Ebene in die andere. So könnte diese Kammer 5 auch Teil der Kammer4 sein. In diesem Fall wären aber besondere Abschottungsmittel wegen der höheren Temperatur vorzusehen.

## Patentansprüche

1. Verfahren zur Wärmebehandlung von zylindrischen Körpern aus keramischem Material, insbesondere Röhren, die während der Wärmebehandlung in insbesondere horizontaler Lage durch verschiedene Temperaturzonen transportiert und zumindest auf dem Teil des Transportweges mit der höchsten Temperatur um ihre eigenen Achsen gedreht werden,
dadurch gekennzeichnet, daß die zylindrischen Körper während des gesamten Transportes durch die einzelnen Wärmezonen mit einer Umfangsgeschwindigkeit um ihre Achsen gedreht werden, die unabhängig von der Transportgeschwindigkeit und ausreichend groß ist, um während des Aufenthaltes in den einzelnen Zonen gleichmäßig erwärmt bzw. abgekühlt zu werden und unter Berücksichtigung der temperaturabhängigen Formsteifigkeit der Körper eine Deformation der Körper zu verhindern, wobei in der Behandlungszone mit der höchsten Temperatur, und zwar der Sinterzone, der in der vorgeordneten Behandlungszone vorerwärmte Körper bei unterbrochenem Transport unter Aufrechterhaltung der Eigendrehung bis auf die gewünschte maximale Temperatur, und zwar auf die Sintertemperatur erwärmt wird und daß die zylindrischen Körper mittels einer im Bereich der Sinterzone vorgesehenen Hebevorrichtung aus einer ersten Ebene von dem Transportmittel dervorgeordneten Kammer übernommen und in eine zweite Ebene überführt und an das Transportmittel der nachgeordneten Kammer übergeben werden.

2. Verfahren nach Anspruch 1,
dadurch gekennzeichnet, daß die Temperatur in der für die Behandlung mit der höchsten Temperaturvorgesehenen Behandlungszone bei Eintritt des Körpers in diese Behandlungszone von der Temperatur am Ende der vorgeordneten Behandlungszone bis auf die gewünschte höchste Endtemperatur angehoben und vor dem Verlassen dieser Behandlungszone auf die Temperatur am Anfang der nachgeordneten Behandlungszone abgesenkt wird.

3. Verfahren nach Anspruch 1 oder 2,
dadurch gekennzeichnet, daß die Wärmebehandlung in der Behandlungszone mit der höchsten Temperatur in einem von der vorgeordneten und nachgeordneten Zone abgschotteten Raum erfolgt.

4. Verfahren nach einem der Ansprüche 1 bis 3, dadurch gekennzeichnet, daß die Erwärmung von Röhren als wärmezubehandelnde Körper, insbesondere in der Temperaturzone mit der höchsten Temperatur, sowohl von außen als auch von innen erfolgt.

5. Verfahren nach einem der Ansprüche 1 bis 4, dadurch gekennzeichnet, daß der Transport der Körper zu und von der Behandlungszone mit der höchsten Temperatur parallel, insbesondere übereinander, erfolgt, wobei zwischen den Körpern des einen Transportstranges und denen des anderen, gegenläufigen Transportstranges ein Wärmeaustausch stattfindet.

6. Anlage zur Durchführung des Verfahrens nach Anspruch 1, bestehend aus mehreren, hintereinander angeordneten Kammern mit Heizeinrichtungen und Transportmitteln für den Transport zylindrischer Körper in horizontaler Lage durch die Kammern,
dadurch gekennzeichnet, daß die Transportmittel (10a,10b,11,12) angetriebene Tragelemente (13,14) aufweisen, mit denen die Körper (9), unabhängig von der Transportgeschwindigkeit der Transportmittel (1 Oa, 1 Ob, 11,12) in der jeweiligen Kammer um ihre eigenen Achsen drehbar sind, wobei die Kammer (5) für die Wärmebehandlung mit der höchsten Temperatur, und zwar der Sintertemperatur, für eine stationäre Wärmebehandlung unter Aufrechterhaltung der Eigendrehung eingerichtet ist und daß die Kammer (5) mit der höchsten Behandlungstemperatur mit einer Hebevorrichtung ausgerüstet ist, mit der der Körper (9) aus einer ersten Ebene von dem Transportmittel (1 Ob) der vorgeordneten Kammer (4a) übernehmbar und in eine zweite Ebene überführbar und an das Transportmittel (10a) der nachgeordneten Kammer übergebbar ist.

7. Anlage nach Anspruch 6,
dadurch gekennzeichnet, daß die Transportmittel endlose Bänder oder Ketten (10a, 10b) mit angetriebenen Stützrollen (13,14) oder Kragarmen sind.

8. Anlage nach Anspruch 7,
dadurch gekennzeichnet, daß der eine Trum (10a) des Bandes oder der Kette durch eine der Kammer (5) mit der höchsten Behandlungstemperatur vorgeordneten Kammer (4a) und der gegenläufige, andere Trum (10b) des Bandes oder der Kette durch die Kammer (4b) läuft, die entsprechend weit der Kammer (5) mit der höchsten Behandlungstemperatur nachgeordnet ist.

9. Anlage nach einem der Ansprüche 6 bis 8, dadurch gekennzeichnet, daß die in Transportrichtung hintereinaner angeordneten Kammern (3,4,5) seitlich gegeneinander versetzt und mit ihren Transportmitteln (10a,10b) einander überlappend angeordnet sind.

## Claims

1. A method of heat treatment of cylindrical bodies of ceramic material, more particularly pipes, which during the heat treatment are conveyed more particularly in horizontal attitude through different temperature zones and are rotated around their own axes, at least over the part of the conveying path with the highest temperature, characterized in that during the whole of their conveying through the individual heating zones the cylindrical bodies are rotated around their axes at a peripheral speed which is independent of the conveying speed and high enough to ensure to perform heating or cooling during the dwell in the individual zones and to prevent deformation of the bodies, having regard to their temperature- dependent dimensional stability, while in the treatment zone of maximum temperature (sintering zone) the body preheated in the preceding treatment zone is heated, with continued conveying and while maintaining its own rotation, up to the required maximum temperature (sintering temperature), and the cylindrical bodies are taken over by means of a lifting device, provided in the area of the sintering zone, out of a first plane from the conveying means of the preceding chamber and transferred to a second plane and passed on to the conveying means of the following chamber.

2. A method according to claim 1, characterized in that the temperature in the treatment zone intended for the treatment with the maximum temperature is raised when the body enters said treatment zone from the temperature at the end of the preceding treatment zone up to the required maximum final temperature and prior to leaving said treatment zone is lowered to the temperature at the start of the following treatment zone.

3. A method according to claims 1 or 2, characterized in that the heat treatment in the treatment zone with the maximum temperature is performed in a space partitioned off from the preceding and following zones.

4. A method according to one of claims 1 to 3, characterized in that the heating of pipes as bodies to be heat-treated, more particularly in the temperature zone with the maximum temperature, is performed both from outside and from inside.

5. A method according to one of claims 1 to 4, characterized in that the conveying of the bodies to and away from the treatment zone with the maximum temperature is performed in parallel, more particularly one above the other, heat exchange taking place between the bodies of one conveying line and those of the other conveying line in the opposite direction.

6. An installation for the performance of the method according to claim 1, comprising a number of chambers arranged in series and having heating devices and conveying means for conveying cylindrical bodies in a horizontal attitude through the chambers, characterized in that the conveying means (10a, 10b, 11, 12) have supporting elements (13,14) via which the bodies (9) can be rotated around their own axes, independently of the conveying speed of the conveying means (10a, 10b, 11, 12), the chamber (5) for the heat treatment with the maximum temperature (sintering temperature) being equipped for a steady heat treatment, while the cylindrical bodies maintain their own rotation, and the chamber (5) with the maximum treatment temperature has a lifting device via which the body (9) can be taken over out of a first plane from the conveying means (10b) of the preceding chamber (4a) and transferred into a second plane and passed on to the conveying means (10a) of the following chamber.

7. An installation according to claim 6, characterized in that the conveying means are endless belts or chains (1 Oa, 1 Ob) having driven supporting rollers (13, 14) or all brackets.

8. An installation according to claim 7, characterized in that one run (10a) of the belt or chain runs through a chamber (4a) preceding the chamber (5) with the maximum treatment temperature, and the oppositely running other run (10b) of the belt or chain runs through the chamber (4b) which follows at a corresponding distance the chamber (5) with the maximum treatment temperature.

9. An installation according to one of claims 6 to 8, characterized in that the chambers (3, 4, 5), which are disposed in series in the conveying direction, are offset laterally in relation to one another and with their conveying means (10a, 10b) overlapping one another.

## Revendications

1. Procédé pour le traitement thermique d'objets cylindriques en matériau céramique, en particulier de tubes, qui sont transportés pendant le traitement thermique en particulier en position horizontale à travers diverses zones de températures et qui sont mis en rotation autour de leur propre axe au moins dans la partie de la trajectoire de transport ayant la température la plus élevée, caractérisé en ce que les objets cylindriques sont entraînés en rotation autour de leur axe pendant tout le transport à travers les zones thermiques individuelles à une vitesse périphérique qui est indépendante de la vitesse de transport et est suffisamment élevée pour permettre pendant le séjour dans les zones individuelles, d'être échauffés ou respectivement refroidis uniformément et empêcher une déformation des objets en tenant compte de la rigidité de forme des objets dépendant de la température, les objets préchauffés dans la zone de traitement précédente étant chauffés jusqu'à la température maximale souhaitée et en fait à la température de frittage dans la zone de traitement ayant la température la plus élevée, et en fait dans la zone de frittage, avec interruption du transport et maintien de la rotation propre, et en ce que les objets cylindriques au moyen d'un dispositif de levage disposé dans la zone de frittage, sont reçus depuis un premier plan par le moyen de transport de la chambre précédente et transportés dans un second plan et livrés au moyen de transport de la chambre suivante.

2. Procédé selon la revendication 1,
caractérisé en ce que la température, dans la zone de traitement prévue pour le traitement à la température la plus élevée, est élevée lors de l'entrée de l'objet dans cette zone de traitement de la température à la fin de la zone de traitement disposée antérieurement jusqu'à la température finale la plus élevée souhaitée et, avant de quitter cette zone de traitement, est abaissée à la température au début de la zone de traitement disposée postérieurement.

3. Procédé selon la revendication 1 ou 2, caractérisé en ce que le traitement thermique dans la zone de traitement ayant la température de traitement la plus élevée est effectué dans un volume séparé de manière étanche par rapport aux zones disposées avant et après.

4. Procédé selon l'une des revendications 1 à 3, caractérisé en ce que l'échauffement de tubes en tant qu'objets à traiter thermiquement, en particulier dans la zone de température ayant la température la plus élevée, est effectué aussi bien depuis l'extérieur que depuis l'intérieur.

5. Procédé selon l'une des revendications 1 à 4, caractérisé en ce que le transport des objets vers et depuis la zone de traitement ayant la température la plus élevée est effectué en parallèle, en particulier les uns au-dessus des autres, un échange thermique se produisant entre les objets d'un tronçon de transport et ceux de l'autre tronçon de transport se déplaçant en sens inverse.

6. Installation pour la mise en oeuvre du procédé selon la revendication 1, constituée de plusieurs chambres disposées les unes derrière les autres avec des dispositifs de chauffage et des moyens de transport pour le transport d'objets cylindriques en position horizontale à travers les chambres,
caractérisée en ce que les moyens de transport (10 a, 10 b, 11, 12) présentent des éléments de support entraînés (13, 14) par lesquels les objets (9) peuvent être entraînés en rotation autour de leur propre axe indépendamment de la vitesse de transport des moyens de transport (10 a, 10 b, 11, 12) dans les chambres respectives, la chambre (5) pour le traitement thermique à la température la plus élevée, et en fait la température de frittage, étant équipée pour un traitement thermique stationnaire avec maintien de la rotation propre, et en ce que la chambre (5) ayant la température de traitement la plus élevée est équipée d'un dispositif de levage par lequel l'objet (9) peut être reçu depuis un premier plan par le moyen de transport (10 b) de la chambre (4 a) disposée précédemment et peut être transporté dans un second plan et être livré au moyen de transport (10a) de la chambre disposée après.

7. Installation selon la revendication 6,
caractérisée en ce que les moyens de transport sont formés par des bandes sans fin ou des chai- nes (10 a, 10 b) avec des rouleaux d'appui entrai- nés ( 13, 14 ) ou des bras en porte-à-faux.

8. Installation selon la revendication 7,
caractérisée en ce qu'un des brins (10 a) de la bande ou de la chaîne traverse une chambre (4 a) disposée avant la chambre (5) ayant la température de traitement la plus élevée et l'autre brin (10 b) de la bande ou de la chaîne circulant en sens inverse traverse la chambre (4 b) qui est disposée après et à une distance correspondante de la chambre (5) ayant la température de traitement la plus élevée.

9. Installation selon l'une des revendications 6 à 8, caractérisée en ce que les chambres (3,4, 5) disposées l'une derrière l'autre dans la direction de transport sont décalées latéralement l'une par rapport à l'autre et sont disposées se chevauchant l'une l'autre par leurs moyens de transport (10 a, 10 b).
